# EUROPEAN PATENT APPLICATION

(11) **EP 4 604 447 A1**
(43) Date of publication of application: **20.08.2025**
(21) Application number: 24157481.3
(22) Date of filing: 13.02.2024
(51) Int. Cl.: H04L 9/08, G06F 21/72, H04L 9/32

(54) **METHOD FOR ENABLING TIME-BASED CONDITIONAL ACCESS TO A FIRST PRIVATE KEY OR TIME SENSITIVE DATA ENCRYPTED THEREWITH**

(71) Applicant: Snowcrash B.V., 3526 KV Utrecht (NL)
(72) Inventor: Etheredge, Cecill Edward, 3527 TJ Utrecht (NL)
(74) Representative: 't Jong, Bastiaan Jacob

(57) **Abstract**

The invention relates to a computer-implemented method for enabling time-based conditional access to a first private key, in which an imported step encompasses obtaining an authenticated timestamp from a satellite system time source, preferably a Global Navigation Satellite System time source.

In second aspect, the invention relates to method for performing the preparatory steps of the method according to the invention. In a third aspect the invention relates to a method for performing the usage steps of the method according to the invention. In a fourth, fifth and sixth aspect the invention relates to respectively a device, a computer program and a computer-readable medium.

## Description

The present invention relates to a method for enabling time-based conditional access to a first private key or time sensitive data encrypted therewith.

In second aspect, the invention relates to method for performing the preparatory steps of the method according to the invention. In a third aspect the invention relates to a method for performing the usage steps of the method according to the invention. In a fourth, fifth and sixth aspect the invention relates to respectively a device, a computer program and a computer-readable medium.

Known methods exist for controlling the release of time sensitive information based on reaching a time-based condition, such as a point in time, typically a future point in time.

All such systems have in common that a trusted notion of time is available, so that it is possible to reliably evaluate the time-based condition. Known methods rely for that purpose on time sources such as provided by an internet server, blockchain or other networked system under control of a provider of time-based conditional access related services. Known solutions therefor have a huge drawback in the requirement of the time sources remaining operable and under continued trustworthy operation. Furthermore, access to said infrastructure is required to obtain access to the time sensitive data when the time-based condition is achieved.

It is therefore an object of the present invention to reduce or even obviate the above-mentioned drawback.

This object is achieved according to the invention by providing a computer-implemented method for enabling time-based conditional access to a first private key, such as the private key of a first key pair, the method comprising the preparatory steps of:
- obtaining a criterion, which criterion is a time-based criterion such as an unbounded time-period with a start timestamp or an end timestamp or a bounded time-period with a start timestamp and an end timestamp;
- generating an authenticated criterion by authenticating the criterion, for at least protecting the integrity thereof, with a second private key, such as the private key of a second key pair;
and wherein the method further comprises the usage steps of:
* obtaining an authenticated timestamp from a satellite time source, preferably a Global Navigation Satellite System time source, which satellite time source generated the authenticated timestamp by authenticating, for at least protecting the integrity thereof, a timestamp local to the time source with a third private key, such as the private key of a third key pair;
* verifying the authenticity of the authenticated criterion, for example with the key corresponding to the second private key, such as the second private key or the public key of the second key pair, for obtaining a verified criterion;
* verifying the authenticity of the authenticated timestamp, for example with the key corresponding to the third private key, such as the third private key or the public key of the third key pair, for obtaining a verified timestamp; and
* providing access to the first private key if and only if the verified timestamp satisfies the verified criterion.

The method according to the invention can be implemented by employing known ciphers using symmetric and asymmetric encryption, but asymmetric encryption using key pairs with a public key and a private key is preferred for most if not all steps of the method involving encryption.

In a preparatory stage, the method involves obtaining a criterion to be met for obtaining access to the first private key, or time sensitive data encrypted therewith. Such a criterion is in most cases that a specified future point in time has been reached, but the method according to the invention can also effectively be applied for the reverse option, where a specified future point in time has not been reached or a combination of both. The criterion as specified by the owner of the first private key and/or the time sensitive data encrypted therewith can thus be converted to an unbounded time-period with an end timestamp, which period thus includes all points in time up to and including the point in time identified by the end timestamp, or alternatively worded relates to a time-based condition corresponding to *until.* Alternatively it can be specified as an unbounded time-period with a start timestamp, which period thus includes all points in time including and past the point in time identified by the start timestamp, or alternatively worded relates to a time-based condition corresponding to *eventually.* In an alternative bounded time-period, the time-period is specified by both a start timestamp and an end timestamp, which period thus includes all points in time between the point in time identified by the start timestamp and the point in time identified by the end timestamp, or alternatively worded relates to a time-based condition corresponding to *during.*

In order to prevent tampering with the criterion to gain unauthorized access to the first private key, an authenticated criterion is generated by authenticating the criterion with a second private key, such as the private key of a second key pair. Such authentication should at least protect the integrity of the criterion, so the criterion can for example be signed or even fully encrypted.

In a usage stage of the method, an authenticated timestamp is received from a satellite system time source, preferably a Global Navigation Satellite System (GNSS) time source. Examples of well-known GNSS systems are the Global Positioning System (GPS), Galileo, GLONASS or Beidou. By using a satellite system time source, a huge benefit over the known methods is obtained. Satellites are not easily tampered with and furthermore satellites with high-precision time sources are readily and widely available. Specifically satellites used for GNSS, which rely on highly precise time-keeping and are by their function thus guaranteed to provide accurate and monotonically increasing timestamps. In order to further increase trust in the accuracy of the time source, the method adds the requirement that the integrity and preferably also the origin of the time source can be verified. The satellite system or satellite therefor authenticates the locally obtained timestamp with a third private key, such as the private key of a third key pair. Anti-spoofing security enabled in a GNSS can effectively be leveraged for the purpose of the invention, such as for example expected to be provided in the near future by the Open Service Navigation Message Authentication (OSNMA) extension of the Galileo GNSS, as maintained by the European Union.

With both the criterion and the timestamp being verifiably trustworthy, the method can proceed with evaluating whether the verified timestamp satisfies the time-based condition laid down in the verified criterion, so whether the verified timestamp falls within the time-period specified by the criterion. If and only if the evaluation of the verified timestamp with respect to the verified criterion results in the conclusion that the verified timestamp satisfies the verified criterion, the first private key is provided access to. This means that only then, the time sensitive data can be decrypted with that first private key, both when using symmetric and asymmetric encryption. The dependency for obtaining access to the first private key according to the method thus only relies on the availability of an authenticated timestamp.

It will be apparent that, for cases where an end timestamp is involved in the time-based criterion, no method, and surely not the method according to the invention, can prevent the first private key or the time sensitive data to which access was obtained according to the method while the criterion was satisfied, to be used or available after that end-time. So the method can not revoke the access once provided.

In another embodiment of a method according to the invention, the authenticated timestamp is synchronously obtained from a signal, such as a radio frequency signal, transmitted by the satellite system, preferably by a satellite thereof, and acquired by a receiver.

While it is possible to obtain authenticated timestamps which were recorded and indirectly obtained, there are benefits by using a receiver for acquiring a signal encompassing the authenticated timestamp synchronously, because the authenticated timestamp received that way allows an accurate and authenticated notion of the actual point in time to be deduced. This is especially worthwhile for evaluating a criterion involving an end timestamp. The receiver can for example be a known GNSS receiver.

Also an embodiment of a method according to the invention, is a method wherein the criterion comprises an end timestamp, and wherein the method further comprises the preparatory step of
- defining a validity period of an authenticated timestamp;
and wherein in the step of verifying the authenticity of the authenticated timestamp, besides verification of the authenticity of the authenticated timestamp, the age of the authenticated timestamp is verified to fall within a validity period directly preceding a notion of the current time, the notion of the current time preferably being based on the synchronously obtained authenticated timestamp.

By defining a validity period, specifying the period during which an authenticated timestamp is still considered fresh or actual, it can be determined whether an obtained authenticated timestamp is usable for consideration of the end timestamp. The validity period can for example be defined to be an hour, allowing an authenticated timestamp applied according to the method within an hour to be validly considered for determining whether the authenticated timestamp is still before the end timestamp. This prevents a previously recorded authenticated timestamp to be used for fulfilling a criterion of which the end timestamp is in the past, without requiring an authenticated timestamp to be synchronously received. The validity period can be a part of the specification of the end timestamp of the criterion.

A further embodiment of a method according to the invention, is a method further comprising the preparatory step of:
- generating cipherdata by encrypting time sensitive data to be protected, using the first private key or the key corresponding with the first private key, such as the public key of the first key pair;
and wherein the method further comprises the usage steps of:
* obtaining the cipherdata;
* using the obtained access to the first private key to decrypt the cipherdata to obtain and provide access to the time sensitive data.

By encrypting the time sensitive data using the first private key, or in the case of asymmetric encryption, the key corresponding with the first private key, such as the public key of the first key pair, the first private key does not have to be exposed. The access to it can then be used to decrypt the cipherdata, which can then be provided access to without further requiring direct access to the first private key. This allows the first private key to be used multiple times, which enables uses such as embedding the key into an actual device.

In yet another embodiment of a method according to the invention, the method further comprises the preparatory step of:
- generating a package comprising the cipherdata and the authenticated criterion;
and wherein the method further comprises the usage steps of:
* obtaining the package for obtaining the cipherdata and the authenticated criterion.

By packaging the cipherdata and the authenticated criterion together, the criterion can be explicitly linked with the cipherdata to which it relates. The package itself can be authenticated to at least provide integrity guarantees. Furthermore, the obtained package can be more easily handled by an end user. Optionally, the step of authenticating the criterion can be performed by this step, where the criterion is authenticated by it being incorporated in the authenticated package.

Also an embodiment of a method according to the invention, is a method wherein the second private key is the first private key for associating the criterion for use with the first private key.

By using the first private key for authenticating the criterion, for example by full encryption, the criterion is explicitly linked with the key to which it applies, since only with access to that first private key can the verified criterion be obtained from the authenticated criterion. This further enforces the method and requires less keys or key pairs to be administrated.

In a preferred embodiment of a method according to the invention, at least the usage steps are performed within a trusted execution environment, such as for example within a secure element like a smartcard or Trusted Platform Module (TPM).

By performing the usage steps, or optionally all steps, within a trusted execution environment, the first private key can not easily be exposed. Known trusted execution environments exist which are suitable and are generally considered to be safe with respect to the maintaining secrecy of their contents, such as a smartcard or TPM.

In a second aspect, the invention also relates to a computer-implemented method for performing the preparatory steps of a method according to the invention.

Similarly in a third aspect, the invention also relates to a computer-implemented method for performing the usage steps of a method according to the invention.

The method comprises preparatory steps, which relate to setting up the criterion and for example the steps of encrypting the time sensitive data. These steps can be performed on a different device or location then the usage steps, which for example relate steps such as the verification steps and providing access to the first private key.

In a fourth aspect, the invention also relates to a device comprising a secure element providing a trusted execution environment, such as for example a smartcard or Trusted Platform Module (TPM), and means adapted to execute the steps of the method of any one of the preceding claims.

With a device having a secure element providing a trusted execution environment, the steps of the methods according to the invention can be performed using the device. The device can for example be a USB-device or a wireless device incorporating for example Bluetooth or NFC, such as a smartphone.

In a preferred embodiment of a device according to the invention, the device comprises a receiver for acquiring a signal, such as a radio frequency signal, transmitted by a satellite.

By allowing the device to directly acquire signals transmitted by a satellite, the signal containing authenticated timestamps, the device can be operated entirely independent. No internet-access is required for obtaining authenticated timestamps and synchronously received authenticated timestamps can also be applied due to the integration of the receiver.

In a fifth aspect, the invention relates to a computer program comprising instructions to cause the device according to the invention to execute the steps of any of the methods according to the invention.

In a sixth aspect, the invention relates to a computer-readable medium having stored thereon the computer program according to the invention.

These and other features of the invention are further elucidated with reference to the accompanying drawings.

Figure 1 shows a flowchart of a first embodiment of a method according to the invention.

Figure 2 schematically depicts a device according the invention.

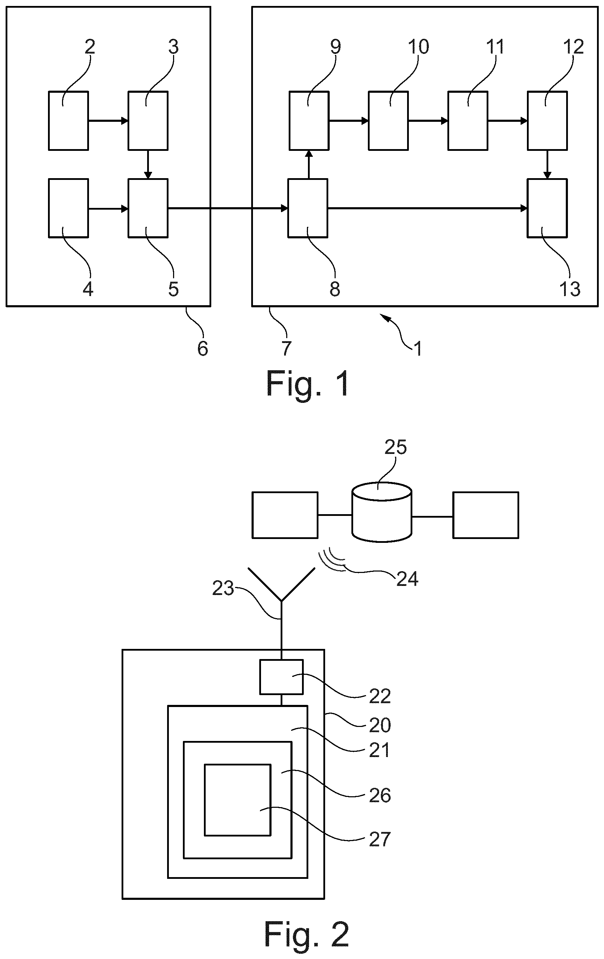

In figure 1 a flowchart 1 is shown, depicting the steps of a first embodiment of a method according to the invention. In a first step 2, a time-based criterion is obtained in the form of an unbounded time-period with a start timestamp. In a second step 3, an authenticated criterion is created based on the criterion, by signing the criterion with a second private key of a second key pair. In a third step 4, cipherdata is obtained by encrypting time sensitive data using the public key of the first key pair. In a fourth step 4, the cipherdata is packaged with the authenticated criterion and the resulting package is signed with the first private key. These steps form the preparatory steps 6 of the depicted embodiment.

In the subsequent usage steps 7, in a fifth step 8 the package is obtained and its signature is optionally verified using the public key of the first key pair, allowing the integrity of the cipherdata and authenticated criterion contained in the package to be verified. The verification in this step is not mandatory if the cipherdata is irrevocably linked with the authenticated criterion in a different way according to the invention, such as through the keys used for encryption thereof or for example by incorporating a hash if the cipherdata in the authenticated criterion.. The authenticity of the authenticated criterion is further verified in a sixth step 9, using the public key of the second key pair, for obtaining a verified criterion. In a seventh step 10, an authenticated timestamp from a satellite time source is obtained. The satellite time source has generated the authenticated timestamp by signing, with a third private key, a timestamp local to the time source and has subsequently transmitted the authenticated timestamp in the form of a signal for a receiver to acquire. In a further step 11, the authenticity of the authenticated timestamp is verified using the known public key of the third key pair, for obtaining a verified timestamp. In a further step 12, it is verified whether the verified timestamp satisfies the time-period according to the verified criterion. If and only if that is the case, access is provided to the first private key for use in the final step 13, wherein the cipherdata is decrypted using the first private key to obtain and provide access to the time sensitive data stored in the cipherdata.

In figure 2, a device 20 according the invention is schematically depicted, comprising a secure element 21 providing a trusted execution environment. The device 20 has a receiver 22 with an antenna 23 for acquiring a radio frequency signal 24 transmitted by a satellite 25. A computer-readable storage medium 26 has stored thereon the computer program 27 comprising instructions to cause the device 20 to execute the steps of the method according to the invention.

## Claims

1. A computer-implemented method for enabling time-based conditional access to a first private key, such as the private key of a first key pair, the method comprising the preparatory steps of:
- obtaining a criterion, which criterion is a time-based criterion such as an unbounded time-period with a start timestamp or an end timestamp or a bounded time-period with a start timestamp and an end timestamp;
- generating an authenticated criterion by authenticating the criterion, for at least protecting the integrity thereof, with a second private key, such as the private key of a second key pair;
and wherein the method further comprises the usage steps of:
* obtaining an authenticated timestamp from a satellite system time source, preferably a Global Navigation Satellite System time source, which satellite system time source generated the authenticated timestamp by authenticating, for at least protecting the integrity thereof, a timestamp local to the time source with a third private key, such as the private key of a third key pair;
* verifying the authenticity of the authenticated criterion, for example with the key corresponding to the second private key, such as the second private key or the public key of the second key pair, for obtaining a verified criterion;
* verifying the authenticity of the authenticated timestamp, for example with the key corresponding to the third private key, such as the third private key or the public key of the third key pair, for obtaining a verified timestamp; and
* providing access to the first private key if and only if the verified timestamp satisfies the verified criterion.

2. Method according to claim 1, wherein the authenticated timestamp is synchronously obtained from a signal, such as a radio frequency signal, transmitted by the satellite system, preferably by a satellite thereof, and acquired by a receiver.

3. Method according to claim 2, wherein the criterion comprises an end timestamp, further comprising the preparatory step of
- defining a validity period of an authenticated timestamp;
and wherein in the step of verifying the authenticity of the authenticated timestamp, besides verification of the authenticity of the authenticated timestamp, the age of the authenticated timestamp is verified to fall within a validity period directly preceding a notion of the current time, the notion of the current time preferably being based on the synchronously obtained authenticated timestamp.

4. Method according to any one of the preceding claims, further comprising the preparatory step of:
- generating cipherdata by encrypting time sensitive data to be protected, using the key corresponding with the first private key, such as the public key of the first key pair;
and wherein the method further comprises the usage steps of:
* obtaining the cipherdata;
* using the obtained access to the first private key to decrypt the cipherdata to obtain and provide access to the time sensitive data.

5. Method according to claim 4, further comprising the preparatory step of:
- generating a package comprising the cipherdata and the authenticated criterion;
and wherein the method further comprises the usage steps of:
* obtaining the package for obtaining the cipherdata and the authenticated criterion.

6. Method according to any one of the preceding claims, wherein the second private key is the first private key for associating the criterion for use with the first private key.

7. Method according to any one of the preceding claims, wherein at least the usage steps are performed within a trusted execution environment, such as for example within a secure element like a smartcard or Trusted Platform Module (TPM).

8. A computer-implemented method for performing the preparatory steps of any one claims 1-7.

9. A computer-implemented method for performing the usage steps of any one of the claims 1-7.

10. A device comprising a secure element providing a trusted execution environment, such as for example a smartcard or Trusted Platform Module (TPM), and means adapted to execute the steps of the method of any one of the preceding claims.

11. Device according to claim 10, comprising a receiver for acquiring a signal, such as a radio frequency signal, transmitted by a satellite.

12. A computer program comprising instructions to cause the device of claim 10 or 11 to execute the steps of the method of any one of the claims 1-9.

13. A computer-readable medium having stored thereon the computer program of claim 12.
